# EUROPÄISCHE PATENTANMELDUNG

(11) **EP 4 187 211 A1**
(43) Veröffentlichungstag der Anmeldung: **31.05.2023**
(21) Anmeldenummer: 21211061.3
(22) Anmeldetag: 29.11.2021
(51) Int. Cl.: G01F 23/263

(54) **SYSTEM ZUR DRAHTLOSEN FÜLLSTANDSMESSUNG IN EINEM FLÜSSIGKEITSTANK**

(71) Anmelder: Airbus SAS, 31707 Blagnac (FR)
(72) Erfinder: KAPAUN, Florian, 82024 Taufkirchen (FR); STEINER, Gerhard, 82024 Taufkirchen (FR)
(74) Vertreter: LKGLOBAL Lorenz & Kopf Patentanwalt Attorney at Law PartG mbB

(57) **Zusammenfassung**

Es ist ein System (100) zur drahtlosen Füllstandsmessung in einem Flüssigkeitstank gezeigt, vorzugsweise einem Flüssigkeitstank für eine kryogene Flüssigkeit. Das System weist einen Schwingkreis (12) auf, wobei der Schwingkreis (12) eine Spule (14) und einen Kondensator (16) umfasst. Der Kondensator (16) umfasst eine erste Kondensatorplatte (18) und eine zweite Kondensatorplatte (20), wobei die erste Kondensatorplatte (18) und die zweite Kondensatorplatte (20) beabstandet und eingerichtet sind, dadurch ein zumindest teilweise durch diese begrenztes Volumen (22) zu definieren. Das Volumen (22) ist eingerichtet zumindest teilweise mit einer Flüssigkeit (24) gefüllt zu sein, derart, dass die darin befindliche Flüssigkeit (24) als Dielektrikum wirkt. Das System (100) umfasst ferner eine Messeinrichtung (10) sowie eine Sende-Empfängereinheit (26), wobei die Sende-Empfängereinheit (26) eingerichtet ist Radiowellen mit einer Trägerfrequenz zu emittieren und in den Schwingkreis (12) einzukoppeln. Die Messeinrichtung (10) weist ferner eine Auswerte-Elektronik (28) auf, wobei die Auswerte-Elektronik (28) eingerichtet ist, die Frequenz der im Schwingkreis (12) über die Radiowellen induzierten Schwingung zu messen und einem Füllstand zuzuordnen.

## Beschreibung

### Technisches Gebiet

Die vorliegende Beschreibung betrifft ein System zur drahtlosen Füllstandsmessung in einem Flüssigkeitstank. Insbesondere betrifft die vorliegende Beschreibung ferner einen Flüssigkeitstank und ein Luftfahrzeug mit genanntem System. Ferner betrifft die vorliegende Beschreibung ein Verfahren zum Kalibrieren eines Systems zur drahtlosen Füllstandsmessung in einem Flüssigkeitstank mit genanntem System.

### Technischer Hintergrund

Füllstandmessungen haben in der Industrie unterschiedliche Aufgaben. Dabei müssen auch die physikalischen Eigenschaften des Füllgutes, die Betriebsbedingungen wie Explosionsschutz, Überfüllsicherung und die Beschaffenheit des Behälters berücksichtigt werden. Der Füllstand in einem Flüssigkeitstank ist bei einem intransparentem Werkstoff des Tankaufbaus nicht ohne weiteres ablesbar. Insbesondere bei Flüssigkeiten im kryogenen Bereich ist der Flüssigkeitstank aus einem isolierenden Werkstoff aufgebaut und der Füllstand muss daher durch eine Messeinrichtung bestimmt werden. Die Messeinrichtung muss dabei ein Signal über den Füllstand an einen Benutzer senden, welches wiederum in eine Füllstandinformation transformiert wird.

In der Regel werden diese Systeme drahtgebunden ausgeführt, während bisherige drahtlose Systeme aufwendig sind. Zur drahtlosen Füllstandmessung gehört dabei die kapazitive Füllstandmessung oder -detektierung, bei der die gegenüber Gasen oder Luft unterschiedliche Dielektrizitätskonstante oder Leitfähigkeit der FüllFlüssigkeit ausgenutzt wird.

Zur Messung dient beispielsweise eine im Inneren des Tanks befindliche Sonde. Befindet sich die Sonde in Luft, wird eine bestimmte niedrige Anfangskapazität gemessen. Wird der Behälter befüllt, so steigt mit zunehmender Bedeckung der Sonde die Kapazität des Kondensators.

Eine kapazitive Sonde besteht üblicherweise aus einem Elektronikeinsatz im Gehäuse mit Kabeleinführung, dem Prozessanschluss und einem in den Behälter ragenden Sondenstab oder Sondenseil. Sondenstab oder Sondenseil sind typischerweise aus Edelstahl und mit einer PTFE- oder PFA (Perfluoralkoxylalkan)-Isolation überzogen. Die kapazitive Sonde ist dabei oftmals nach einem Baukastenprinzip mit unterschiedlichen Prozessanschlüssen, Gehäusen und Elektroniken kombinierbar.

Der Aufbau ist dabei aufwendig und die Signalübertragung bedarf einer eigenen Sondenelektronik mit einem Verstärker für eine elektrische Impulsfolge, um aus der Impulsrate den Messwert zu berechnen.

Während bisherige kapazitative Messverfahren ihren Zweck erfüllen, besteht der Bedarf an neuen Messsystemen, die einfach im Aufbau sind und oben genannte Nachteile beseitigen.

### Beschreibung

Es kann als Aufgabe betrachtet werden, eine drahtlose Füllstandsmessung in einem Flüssigkeitstank bereitzustellen.

Diese Aufgabe wird gelöst durch die Gegenstände der unabhängigen Ansprüche. Weitere Ausführungsformen ergeben sich aus den abhängigen Ansprüchen sowie aus der folgenden Beschreibung.

Gemäß einem ersten Aspekt ist ein System zur drahtlosen Füllstandsmessung in einem Flüssigkeitstank, vorzugsweise einem Flüssigkeitstank für eine kryogene Flüssigkeit angegeben. Das System weist hierfür einen Schwingkreis auf, wobei der Schwingkreis eine Spule und einen Kondensator umfasst. Der Kondensator umfasst dabei eine erste Kondensatorplatte und eine zweite Kondensatorplatte, wobei die erste Kondensatorplatte und die zweite Kondensatorplatte beabstandet und eingerichtet sind, dadurch ein zumindest teilweise durch diese begrenztes Volumen zu definieren. Das Volumen ist eingerichtet, zumindest teilweise mit einer Flüssigkeit gefüllt zu sein, derart, dass die Flüssigkeit als Dielektrikum wirkt. Das System weist ferner eine Messeinrichtung sowie eine Sende-Empfängereinheit auf, wobei die Sende-Empfängereinheit eingerichtet ist, Radiowellen mit einer Trägerfrequenz zu emittieren und in den Schwingkreis einzukoppeln. Die Messeinrichtung weist ferner eine Auswerte-Elektronik auf, wobei die Auswerte-Elektronik eingerichtet ist, die Frequenz der im Schwingkreis über die Radiowellen induzierten Schwingung zu messen und einem Füllstand zuzuordnen.

Generell wird bei der Füllstandmessung der Füllstand von Flüssigkeiten in einem Behälter mittels Füllstandmessgeräten erfasst. Man unterscheidet zwischen der kontinuierlichen Messung mittels Füllstandsensoren und Füllstandgrenzschaltern. Bei der kontinuierlichen Messung des Füllstandes werden entsprechend der erreichbaren Standhöhe die Messwerte in Prozent oder in Längen-, Volumen- oder Masseneinheiten als Analogsignal oder Digitalwert ausgegeben.

Drahtlose Übertragungsverfahren sind Datenübertragungsverfahren, die den freien Raum, Luft beziehungsweise Vakuum, als Übertragungsmedium nutzen. Für die Übertragung wird kein Kabel in Form eines elektrischen Leiters, eines Drahts, oder Lichtwellenleiters benötigt. Daher werden vor allem Verfahren im Radiofrequenzbereich als drahtlose Übertragungsverfahren bezeichnet.

Die Übertragung erfolgt durch gerichtete oder ungerichtete elektromagnetische Wellen, wobei der Bereich des genutzten Frequenzbands je nach Anwendung und verwendeter Technik von wenigen Hertz, Niederfrequenz, bis hin zu mehreren hundert Terahertz, sichtbares Licht, variieren kann.

Die drahtlose Füllstandsmessung ist bei einem Tank für eine kryogene Flüssigkeit besonders vorteilhaft. Kryogen ist ein Begriff für Stoffe, Prozesse und Eigenschaften im Zusammenhang mit extrem niedrigen Temperaturen. Flüssige Kryogene sind beispielsweise Helium, Siedepunkt 4,222 K = -268,928 °C, Wasserstoff Siedepunkt 20,268 K = -252,882 °C, Stickstoff Siedepunkt 77,35 K = -195,80 °C, Argon Siedepunkt 87,15 K = -185,8 °C, Sauerstoff Siedepunkt 90,18 K = -182,97 °C. Ein festes Kryogen ist beispielsweise Trockeneis, gefrorenes Kohlenstoffdioxid, Sublimationspunkt 194,5 K = -78,5 °C.

Materie im flüssigen Aggregatzustand bezeichnet nach einer makroskopischen Definition einen Stoff, der einer Formänderung so gut wie keinen, einer Volumenänderung hingegen einen recht großen Widerstand entgegensetzt. Nach einer mikroskopischen Definition ist eine Flüssigkeit ein Stoff, dessen Teilchen sich ständig nichtperiodisch bewegen sowie keiner Fernordnung, jedoch einer Nahordnung unterliegen und deren mittlere freie Weglänge in der Größenordnung des Teilchendurchmessers liegt. Flüssigkeiten sind also volumenbeständig, formunbeständig und unterliegen einer ständigen Brown'schen Bewegung. Der flüssige Zustand ist dabei nicht allein stoffspezifisch, sondern hängt auch von äußeren Faktoren wie Temperatur und Druck ab. Wechselt eine solche Flüssigkeit ihren Aggregatzustand, so spricht man von einer Phasenumwandlung, wobei der Begriff der Phase selbst einen Überbegriff zum Aggregatzustand darstellt.

Das wesentliche Bauteil um Auskunft über den Füllstand der Flüssigkeit zu geben ist der elektrische Schwingkreis. Ein elektrischer Schwingkreis, auch als Resonanzkreis bezeichnet, ist eine resonanzfähige elektrische Schaltung aus einer Spule, Bauteil L, und einem Kondensator, Bauteil C, die elektrische Schwingungen ausführen kann. Bei diesem LC-Schwingkreis wird Energie zwischen dem magnetischen Feld der Spule und dem elektrischen Feld des Kondensators periodisch ausgetauscht, wodurch abwechselnd hohe Stromstärke oder hohe Spannung vorliegen.

Wird ein Schwingkreis durch einen Schaltvorgang oder einen Impuls einmalig angestoßen, dann führt er freie Schwingungen, auch Eigenschwingungen genannt, aus, die in der Realität aufgrund von Verlusten nach einer gewissen Zeit abklingen. Wird er jedoch im Bereich seiner Resonanzfrequenz periodisch erregt, dann führt er erzwungene Schwingungen aus. Die dabei auftretenden Resonanzerscheinungen haben für die praktische Anwendung hohe Bedeutung und stellen die Grundlage für das dargestellte System dar.

Spulen sind in der Elektrotechnik einerseits Wicklungen und Wickelgüter, die geeignet sind, ein Magnetfeld zu erzeugen oder zu detektieren. Sie sind elektrische Bauelemente oder sind Teile eines Gerätes. Die meisten Spulen bestehen aus mindestens einer Wicklung eines Stromleiters aus Draht, Kupferlackdraht, versilbertem Kupferdraht oder Hochfrequenzlitze, der meist auf einem Spulenkörper gewickelt ist, sowie überwiegend mit einem weichmagnetischen Kern versehen ist. Die Windungsanordnung und -form, der Drahtdurchmesser, das Wickel- und das Kernmaterial legen den Wert der Induktivität und die Spulengüte fest. Eine Spule liegt daher vor allem als ein aufgewickelter Draht vor, wobei die Windungen voneinander isoliert sind. Eine Windung ist ein Umlauf einschließlich der Zuleitungen. Die Haupteigenschaft von Spulen ist ihre Induktivität. Die Induktivität ergibt sich aus der Anzahl der Windungen der Spule, dem von der Spule eingeschlossenen Material und den Abmessungen. Wird an die Anschlüsse der Spule eine elektrische Spannung angelegt, so ändert sich der Strom, welcher bei diesem Versuch durch die Spannungsquelle hindurchfließt, nicht schlagartig. Die Änderung des Stromes durch die angelegte Spannung beziehungsweise den Spannungsabfall kommt erst zum Erliegen, wenn durch den Strom am Innenwiderstand eine entsprechende Gegenspannung entsteht.

Kondensatoren sind passive elektrische Bauelemente mit der Fähigkeit, in einem Gleichstromkreis elektrische Ladung und die damit zusammenhängende Energie statisch in einem elektrischen Feld zu speichern. Die gespeicherte Ladung pro Spannung wird als elektrische Kapazität bezeichnet und in der Einheit Farad gemessen. In einem Wechselstromkreis wirkt ein Kondensator als Wechselstromwiderstand mit einem frequenzabhängigen Impedanzwert. Kondensatoren bestehen im Prinzip aus zwei elektrisch leitfähigen Kondensatorplatten, den Elektroden, die von einem isolierenden Material, dem Dielektrikum, voneinander getrennt sind. Die Größe der Kapazität wird durch die Fläche der Elektroden, das Material des Dielektrikums und den Abstand der Elektroden zueinander bestimmt. Die Elektroden und das Dielektrikum können aufgerollt oder parallel geschaltet als Stapel angeordnet sein.

Plattenkondensatoren erlauben in einer modifizierten Ausführung sehr hohe Kapazitäten pro Volumen. Indem man die jeweils mit einem Potential verbundenen Elektroden abwechselnd aufeinander stapelt, verdoppelt sich die Wirksamkeit.

Als Dielektrikum wird eine elektrisch schwach- oder nichtleitende Substanz bezeichnet, in der die vorhandenen Ladungsträger nicht frei beweglich sind. Ein Dielektrikum kann ein Gas, eine Flüssigkeit oder ein Feststoff sein. Die Feldgrößen des Dielektrikums sind die elektrische Feldstärke E und die elektrische Flussdichte D. Sie sind im elektrostatischen, d. h. zeitlich konstanten Fall und in einem isotropen Medium durch die Permittivität ε verknüpft.

Die Permittivität ε, auch dielektrische Leitfähigkeit, Dielektrizität, Dielektrizitätskonstante oder dielektrische Funktion genannt, gibt in der Elektrodynamik sowie der Elektrostatik die Polarisationsfähigkeit eines Materials durch elektrische Felder an.

Unter einer Messeinrichtung ist eine Einrichtung zu verstehen die eingerichtet ist, Messwerte zu generieren. Hierfür weist die Messeinrichtung unter anderem eine Sender-Empfängereinheit auf.

Unter einer Sender-Empfängereinheit ist eine Einrichtung zu verstehen die eingerichtet ist, Signale zu senden und zu empfangen. Im vorliegenden Fall ist die Sender-Empfängereinheit zumindest eingerichtet Radiowellen mit einer definierten Trägerfrequenz zu senden und zu empfangen.

Radiowellen, auch Funkwellen, oder Hertz'sche Wellen, sind als elektromagnetische Wellen definiert, deren Frequenzen unterhalb 3000 GHz liegen, und die sich ohne künstliche Führung im freien Raum ausbreiten.

In der Übertragungstechnik ist die Trägerfrequenz normalerweise eine Sinusschwingung einer bestimmten Frequenz. Bei Sendefunkstellen ist dieser oft zugleich die zugeteilte Frequenz oder Nennfrequenz der abgestrahlten Funkwelle. Die Wahl der Trägerfrequenz ist dabei vom Übertragungsmedium und dem Ausbreitungsverhalten des Trägersignals abhängig.

Unter einem Einkoppeln wird das Übergreifen von elektromagnetischen Wellen auf benachbarte Leitungen, sowie das Übergreifen von einem Leitungskreis auf einen anderen verstanden.

Unter einer Auswerte-Elektronik ist eine Einrichtung zu verstehen die eingerichtet ist, von der Sende-Empfängereinheit empfangene Signale zu messen. Im vorliegenden Fall sind die Signale die Frequenz der von den Radiowellen induzierten Schwingung im Schwingkreis.

Das System sendet somit mit einer Trägerfrequenz drahtlos Radiowellen in einen in einer Flüssigkeit befindlichen Schwingkreis um diesen anzuregen. Die induzierte Frequenz wird daraufhin von der Auswerteelektronik gemessen und einem Füllstand zugeordnet. Der Füllstand kann somit durch eine Auswertung der Frequenz bestimmt werden. Ferner kann die Füllstandmessung durch den bauteilarmen Aufbau auch für kryogene Anwendungen umgesetzt werden.

Gemäß einer weiteren Ausführungsform umfasst der Schwingkreis eine Schutzschicht. Die Schutzschicht kann hierbei darauf ausgelegt sein, den Schwingkreis vor negativen Beeinträchtigungen zu schützen welche insbesondere durch das Füllmedium induziert werden können. Hierzu gehört beispielsweise die Oxidation beziehungsweise galvanische Korrosion oder weitere, unerwünschte chemische Reaktionen.

Gemäß einer weiteren Ausführungsform umfasst der Kondensator eine Kapazität von mehr als 100pF, vorzugsweise mehr als 150 pF. Die Kapazität ist eine physikalische Größe aus dem Bereich der Elektrostatik, Elektronik und Elektrotechnik. Die Kapazität zwischen zwei voneinander isolierten elektrisch leitenden Körpern ist gleich dem Verhältnis der Ladungsmenge Q, die auf diesen Leitern gespeichert ist, Q auf dem einen und -Q auf dem anderen, und der zwischen ihnen herrschenden elektrischen Spannung U.

Gemäß einer weiteren Ausführungsform umfasst die Spule eine Induktivität von mehr als 2,5 µH, vorzugsweise mehr als 3,75 µH. Für Spulen wird die Induktivität in der Elektrotechnik definiert durch den von der Spule umfassten verketteten magnetischen Fluss ψ durch die Stromstärke I.

Gemäß einer weiteren Ausführungsform umfasst die Trägerfrequenz vorzugsweise mehr als 100 MHz, weiter vorzugsweise mehr als 150 MHz, und/oder die Modulationsfrequenz vorzugsweise mehr als 20 kHz, weiter vorzugsweise mehr als 30 kHz. Die Modulationsfrequenz ist dabei die zu übertragende Frequenz, mit der bei der Frequenzmodulation die Trägerfrequenz moduliert wird.

Die Kapazität, Induktivität, sowie die Trägerfrequenz und Modulationsfrequenz sind dabei von dem jeweiligen Anwendungsfall abhängig und können auch jeweils über oder unter den genannten Werten liegen.

Gemäß einer weiteren Ausführungsform weist der der Kondensator eine mehrfache S-Form auf. Die S-Form stellt dabei eine mögliche Ausführungsform dar, die dem Zweck dient die Kapazität des Kondensators durch Maximierung der Kondensatorfläche zu erhöhen. Es sind auch andere Dimensionierungen zur Maximierung der Kondensatorfläche denkbar.

Gemäß einer weiteren Ausführungsform umfasst der Kondensator Kupfer. Kupfer wird rein oder als Legierung insbesondere aufgrund seiner guten elektrischen- und Wärmeleitfähigkeit eingesetzt. Es sind auch andere metallische oder andere geeignete Werkstoffe für die Ausgestaltung des Kondensators denkbar.

Gemäß einer weiteren Ausführungsform umfasst die Auswerte-Elektronik eine Datenbank für verschiedene Flüssigkeiten. Die Datenbank kann dabei verschiedene Eigenschaften der Flüssigkeit, wie beispielsweise die Permittivität, enthalten.

Gemäß einem weiteren Aspekt ist ein Flüssigkeitstank umfassend ein oben beschriebenes System angegeben. Ein Flüssigkeitstank ist dabei ein Behälter zur Bevorratung beziehungsweise Lagerung oder Transport von Flüssigkeiten und kann fast beliebige Dimensionen annehmen. Ein Flüssigkeitstank kann die Form eines Quaders oder Zylinders mit oder ohne Segmente haben.

Gemäß einer weiteren Ausführungsform weist der Flüssigkeitstank in der Nähe des Schwingkreises einen Bereich auf, wobei der Bereich ein elektrisch nicht leitfähiges und thermisch isolierendes Material umfasst. Der Bereich dient dabei dem Zweck möglichst durchlässig für Radiowellen in den Flüssigkeitstank und wieder aus diesem heraus zu sein. Die Form des Bereichs kann dabei beliebig an den Anwendungsfall und die Dimensionierung des Flüssigkeitstanks angepasst werden.

Gemäß einer weiteren Ausführungsform ist der Flüssigkeitstank eingerichtet, kryogene Flüssigkeiten zu enthalten. Bei der Ausgestaltung des Flüssigkeitstanks für die Verwendung mit kryogenen Flüssigkeiten ist insbesondere die thermische Isolierung wesentlich um die thermischen Verluste des Mediums klein zu halten und mögliche unerwünschte Frostschäden in der Nähe des Flüssigkeitstanks zu vermeiden.

Gemäß einer weiteren Ausführungsform ist die Spule außerhalb des Flüssigkeitstanks angeordnet. Da für die vorliegende Füllstandsmessung lediglich das von den Kondensatorplatten eingeschlossene Volumen wesentlich ist, ist es auch möglich die Spule des Schwingkreises außerhalb des Flüssigkeitstanks anzuordnen.

Gemäß einem weiteren Aspekt ist ein Verfahren zum Kalibrieren eines Systems zur drahtlosen Füllstandsmessung in einem Flüssigkeitstank, vorzugsweise mit einem oben beschriebenen System angegeben. Das Verfahren weist dabei die nachfolgend beschriebenen Schritte auf. Zuerst wird ein Flüssigkeitstank bereitgestellt. Anschließend wird an den Flüssigkeitstank das System angebracht. Über eine Sende-Empfängereinheit werden daraufhin Radiowellen in einen Schwingkreis eingekoppelt. Die induzierte Schwingung wird daraufhin über eine Auswerte-Elektronik gemessen. Abschließend wird die gemessene Schwingung zu einem Füllstand zugeordnet.

Die durch dieses Verfahren ermittelten Zuordnungen können ihrerseits in eine oben beschriebene Datenbank eingelesen werden.

Gemäß einem weiteren Aspekt ist ein Luftfahrzeug, mit einem oben beschriebenen System angegeben. Unter einem Luftfahrzeug ist dabei beispielsweise ein Passagierflugzeug, ein Helikopter, eine Drohne, ein Luftschiff oder ein Segelflugzeug zu verstehen. Es sind jedoch auch Landfahrzeuge, Seefahrzeuge, oder stationäre Anwendungen des beschriebenen Systems möglich.

### Kurze Beschreibung der Figuren

Nachfolgend wird anhand der beigefügten Figuren näher auf Ausführungsbeispiele eingegangen. Die Darstellungen sind schematisch und nicht maßstabsgetreu.

Gleiche Bezugszeichen beziehen sich auf gleiche oder ähnliche Elemente. Es zeigen:
- Fig. 1: eine schematische Darstellung eines Systems zur drahtlosen Füllstandsmessung gemäß einem Ausführungsbeispiel.
- Fig. 2: eine schematische Darstellung eines Flüssigkeitstanks gemäß einem Ausführungsbeispiel.
- Fig. 3: eine schematische Darstellung eines Flüssigkeitstanks für kryogene Flüssigkeiten gemäß einem weiteren Ausführungsbeispiel, mit einem ein elektrisch nicht leitfähigen und thermisch isolierenden Material umfassenden Bereich.
- Fig. 4: eine schematische Darstellung eines Flüssigkeitstanks gemäß einem weiteren Ausführungsbeispiel in perspektivischer Ansicht.
- Fig. 5: eine schematische Darstellung eines Flüssigkeitstanks gemäß einem weiteren Ausführungsbeispiel mit maximierter Kondensatoroberfläche.
- Fig. 6: eine schematische Darstellung eines Verfahrens zum Kalibrieren eines Systems zur drahtlosen Füllstandsmessung in einem Flüssigkeitstank.

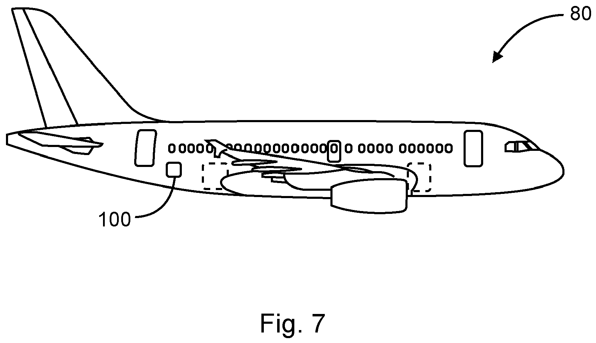

- Fig. 7: eine schematische Darstellung eines Luftfahrzeugs aufweisend ein System zur drahtlosen Füllstandsmessung.

### Detaillierte Beschreibung von Ausführungsbeispielen

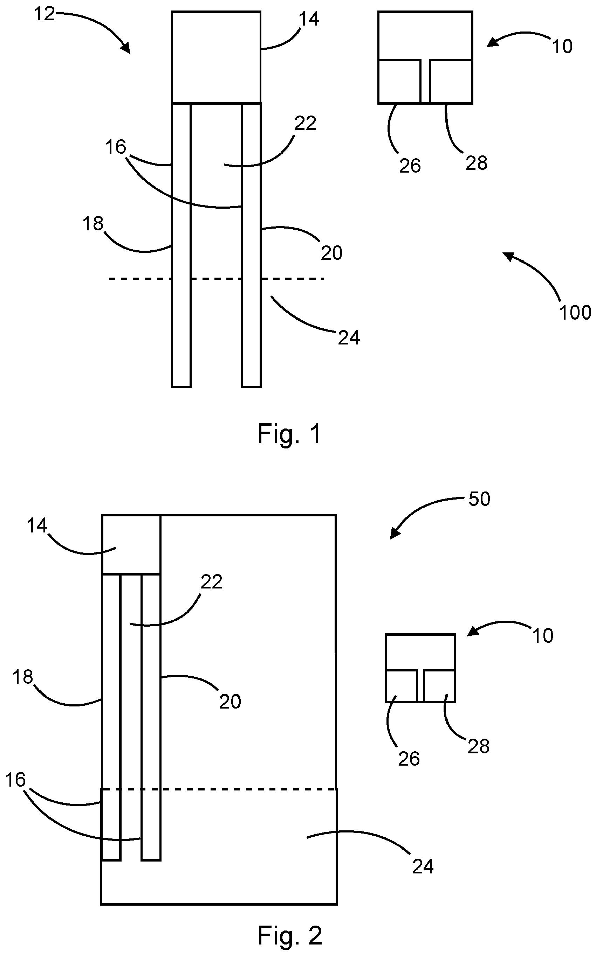

Fig. 1 zeigt ein System 100 zur drahtlosen Füllstandsmessung in einem Flüssigkeitstank, vorzugsweise einem Flüssigkeitstank für eine kryogene Flüssigkeit. Das System weist einen Schwingkreis 12 auf, wobei der Schwingkreis 12 eine Spule 14 und einen Kondensator 16 umfasst. Der Kondensator 16 umfasst eine erste Kondensatorplatte 18 und eine zweite Kondensatorplatte 20, wobei die erste Kondensatorplatte 18 und die zweite Kondensatorplatte 20 beabstandet und eingerichtet sind, dadurch ein zumindest teilweise durch diese begrenztes Volumen 22 zu definieren, wobei das Volumen 22 eingerichtet ist, zumindest teilweise mit einer Flüssigkeit 24 gefüllt zu sein, derart, dass die Flüssigkeit 24 als Dielektrikum wirkt. Das System 100 weist ferner eine Messeinrichtung 10 und eine Sende-Empfängereinheit 26 auf, wobei die Sende-Empfängereinheit 26 eingerichtet ist, Radiowellen mit einer Trägerfrequenz zu emittieren und in den Schwingkreis 12 einzukoppeln. Die Messeinrichtung 10 weist ferner eine Auswerte-Elektronik 28 auf, wobei die Auswerte-Elektronik 28 eingerichtet ist, die Frequenz der im Schwingkreis 12 über die Radiowellen induzierten Schwingung auszuwerten und einem Füllstand zuzuordnen.

Fig. 2 zeigt eine schematische Darstellung eines Flüssigkeitstanks 50 gemäß einem weiteren Ausführungsbeispiel. Der Flüssigkeitstank weist dabei das System 100 zur drahtlosen Füllstandsmessung aus Fig. 1 auf. Das System weist zur Messung den Schwingkreis 12 auf, wobei der Schwingkreis 12 eine Spule 14 und einen Kondensator 16 umfasst und an eine Wand innerhalb des Flüssigkeitstanks angebracht ist. Der Kondensator 16 umfasst die erste Kondensatorplatte 18 und die zweite Kondensatorplatte 20, wobei die erste Kondensatorplatte 18 und die zweite Kondensatorplatte 20 beabstandet und eingerichtet sind, dadurch ein zumindest teilweise durch diese begrenztes Volumen 22 zu definieren, wobei das Volumen 22 eingerichtet ist, zumindest teilweise mit einer Flüssigkeit 24 gefüllt zu sein, derart, dass die Flüssigkeit 24 als Dielektrikum wirkt.

Es ist auch denkbar, dass die erste Kondensatorplatte 18 funktional durch eine Seitenwand des Flüssigkeitstanks 50 definiert wird. In diesem Fall entfällt die erste Kondensatorplatte 18 als zweites Bauteil, wodurch der Schwingkreis 12 durch die Spule 14, die zweite Kondensatorplatte 20 und die Seitenwand definiert wird und neben dem Flüssigkeitstank 50 lediglich zwei zusätzliche Bauteile, Spule 14 und eine Kondensatorplatte, stationär mit dem Flüssigkeitstank 50 in Kontakt stehen müssen. Vorteilhafterweise ist die Spule 14 derart in dem Flüssigkeitstank 50 angeordnet, dass sie nicht mit der im Flüssigkeitstank 50 befindlichen Flüssigkeit in Kontakt steht.

Der Flüssigkeitstank 50 weist ferner außerhalb des Tanks die Messeinrichtung 10 und eine Sende-Empfängereinheit 26 auf, wobei die Sende-Empfängereinheit 26 eingerichtet ist Radiowellen mit einer Trägerfrequenz zu emittieren und in den Schwingkreis 12 einzukoppeln. Die Messeinrichtung 10 weist ferner eine Auswerte-Elektronik 28 auf, wobei die Auswerte-Elektronik 28 eingerichtet ist die Frequenz der im Schwingkreis 12 über die Radiowellen induzierten Schwingung auszuwerten und einem Füllstand zuzuordnen.

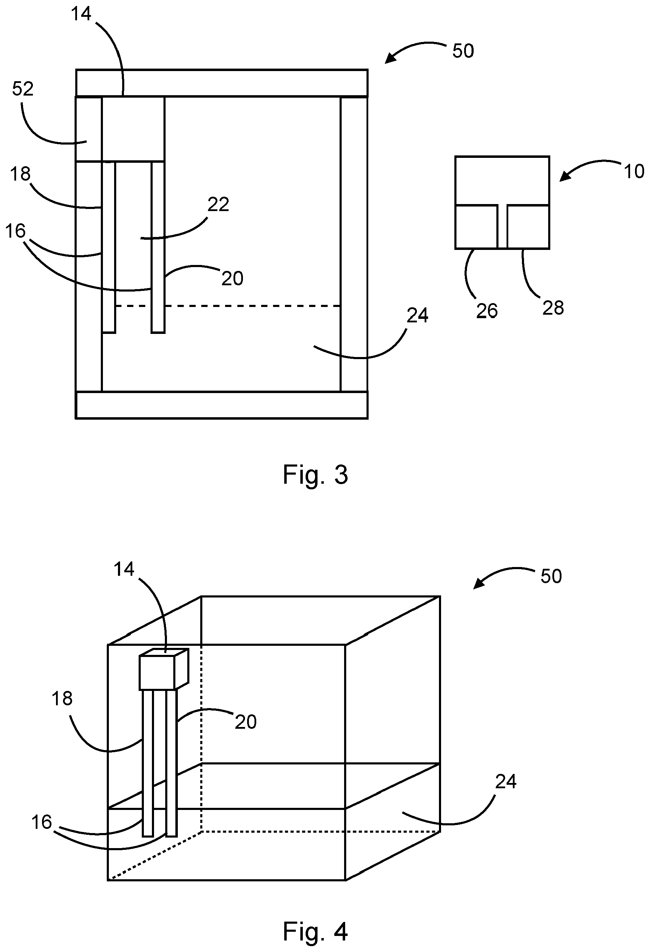

Fig. 3 zeigt eine schematische Darstellung eines Flüssigkeitstanks 50 der eingerichtet ist, kryogene Flüssigkeiten zu enthalten, gemäß einem weiteren Ausführungsbeispiel mit einem ein elektrisch nicht leitfähiges und thermisch isolierendes Material umfassenden Bereich 52. Der Flüssigkeitstank 50 weist dabei das System 100 zur drahtlosen Füllstandsmessung und eine Verschalung auf. Das System weist einen Schwingkreis 12 auf, wobei der Schwingkreis 12 eine Spule 14 und einen Kondensator 16 umfasst und an eine Wand des Flüssigkeitstanks angebracht ist. Der Kondensator 16 umfasst eine erste Kondensatorplatte 18 und eine zweite Kondensatorplatte 20, wobei die erste Kondensatorplatte 18 und die zweite Kondensatorplatte 20 eingerichtet sind, ein Volumen 22 zu definieren, wobei das Volumen 22 eingerichtet ist, zumindest teilweise mit einer Flüssigkeit 24 gefüllt zu sein, derart, dass die Flüssigkeit 24 als Dielektrikum wirkt. Der Flüssigkeitstank 50 weist ferner eine Messeinrichtung 10, die von dem Flüssigkeitstank beabstandet ist. Die Messeinrichtung weist eine Sende-Empfängereinheit 26 auf, wobei die Sende-Empfängereinheit 26 eingerichtet ist, Radiowellen mit einer Trägerfrequenz zu emittieren und in den Schwingkreis 12 einzukoppeln. Die Messeinrichtung 10 weist ferner eine Auswerte-Elektronik 28 auf, wobei die Auswerte-Elektronik 28 eingerichtet ist die Frequenz der im Schwingkreis 12 über die Radiowellen induzierten Schwingung auszuwerten und einem Füllstand zuzuordnen.

Durch das elektrisch nicht leitfähige und thermisch isolierende Material des Bereich 52 können die Radiowellen möglichst verlustfrei eingekoppelt sowie die entstehenden Eigenfrequenzen gemessen werden.

Es ist auch hier denkbar, dass die erste Kondensatorplatte 18 funktional durch eine Seitenwand des Flüssigkeitstanks 50 definiert wird. In diesem Fall entfällt ebenfalls die erste Kondensatorplatte 18 als zweites Bauteil, wodurch der Schwingkreis 12 durch die Spule 14, die zweite Kondensatorplatte 20 und die Seitenwand definiert wird und neben dem Flüssigkeitstank 50 lediglich zwei zusätzliche Bauteile, insbesondere die Seitenwand des Flüssigkeitstanks und eine Kondensatorplatte stationär mit dem Flüssigkeitstank 50 in Kontakt stehen müssen.

Fig. 4 zeigt eine schematische Darstellung eines Flüssigkeitstanks 50 gemäß einem weiteren Ausführungsbeispiel in perspektivischer Ansicht. Die Form des Flüssigkeitstanks 50 ist dabei quaderförmig.

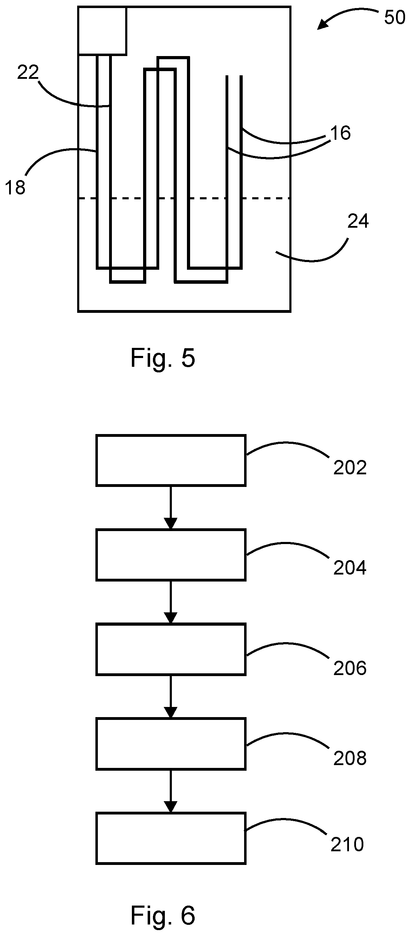

Fig. 5 zeigt eine schematische Darstellung eines Flüssigkeitstanks 50 gemäß einem weiteren Ausführungsbeispiel mit maximierter Kondensatoroberfläche. Die Kondensatorplatten 18, 22 sind dabei derart zueinander angeordnet, dass sie mehrmals entlang einer Achse die Richtung wechseln und dadurch eine hohe Kondensatoroberfläche generieren. Da die Kapazität eines Kondensators direkt linear mit der Kondensatoroberfläche zusammenhängt ist eine hohe Oberfläche wünschenswert. Es sind auch noch andere Ausgestaltungen der Kondensatorplatten 18, 22 möglich und das System 100 ist nicht auf diese beschränkt. Weitere Ausgestaltungen wären unter anderem ein Zylinderkondensator, ein Kugelkondensator, eine Lecher-Leitung, eine Kreisscheibe oder ein gerades Drahtstück.

Fig. 6 zeigt ein Verfahren 200 zum Kalibrieren eines Systems 100 zur drahtlosen Füllstandsmessung in einem Flüssigkeitstank 50, vorzugsweise mit einem oben beschriebenen System 100. Das Verfahren 200 weist dabei die nachfolgend beschriebenen Schritte auf. Zuerst wird ein Flüssigkeitstank 50 bereitgestellt 202. Anschließend wird an den Flüssigkeitstank 50 das System 100 angebracht 204. Über eine Sende-Empfängereinheit 26 werden daraufhin Radiowellen in einen Schwingkreis 12 eingekoppelt 206. Die induzierte Schwingung wird daraufhin über eine Auswerte-Elektronik 28 gemessen 208. Abschließend wird die gemessene Schwingung zu einem Füllstand zugeordnet 210.

Die durch das Verfahren 200 ermittelten Zuordnungen können ihrerseits in eine Datenbank eingelesen werden um einem Benutzer ein schnelles und einfaches drahtloses Messen des Füllstands zu ermöglichen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: System
- 10: Messeinrichtung
- 12: Schwingkreis
- 14: Spule
- 16: Kondensator
- 18: erste Kondensatorplatte
- 20: zweite Kondensatorplatte
- 22: Volumen
- 24: Flüssigkeit
- 26: Sende-Empfängereinheit
- 28: Auswerte-Elektronik
- 50: Flüssigkeitstank
- 52: Bereich
- 80: Luftfahrzeug
- 200: Verfahren zum Kalibrieren
- 202: Bereitstellen eines Flüssigkeitstanks
- 204: Anbringen des Systems an den Flüssigkeitstank
- 206: Einkoppeln von Radiowellen über eine Sende-Empfängereinheit
- 208: Messen der induzierten Schwingung über eine Auswerte-Elektronik
- 210: Zuordnen der gemessen Schwingung zu einem Füllstand

## Patentansprüche

1. System (100) zur drahtlosen Füllstandsmessung in einem Flüssigkeitstank, vorzugsweise einem Flüssigkeitstank für eine kryogene Flüssigkeit, aufweisend:
einen Schwingkreis (12), wobei der Schwingkreis (12) eine Spule (14) und einen Kondensator (16) umfasst, wobei der Kondensator (16) eine erste Kondensatorplatte (18) und eine zweite Kondensatorplatte (20) umfasst, wobei die erste Kondensatorplatte (18) und die zweite Kondensatorplatte (20) beabstandet und eingerichtet sind, dadurch ein zumindest teilweise durch diese begrenztes Volumen (22) zu definieren, wobei das Volumen (22) eingerichtet ist zumindest teilweise mit einer Flüssigkeit (24) gefüllt zu sein, derart, dass die Flüssigkeit (24) als Dielektrikum wirkt,
eine Messeinrichtung (10) aufweisend eine Sende-Empfängereinheit (26), wobei die Sende-Empfängereinheit (26) eingerichtet ist Radiowellen mit einer Trägerfrequenz zu emittieren und in den Schwingkreis (12) einzukoppeln,
wobei die Messeinrichtung (10) ferner eine Auswerte-Elektronik (28) aufweist, wobei die Auswerte-Elektronik (28) eingerichtet die Frequenz der im Schwingkreis (12) über die Radiowellen induzierten Schwingung auszuwerten und einem Füllstand zuzuordnen.

2. System (100) nach Anspruch 1,
wobei der Schwingkreis (12) eine Schutzschicht umfasst.

3. System (100) nach Anspruch 1 oder 2,
wobei der Kondensator (16) eine Kapazität von mehr als 100pF, vorzugsweise mehr als 150 pF umfasst.

4. System (100) nach einem der voranstehenden Ansprüche,
wobei die Spule (14) eine Induktivität von mehr als 2,5 µH, vorzugsweise mehr als 3,75 µH umfasst.

5. System (100) nach einem der voranstehenden Ansprüche,
wobei die Trägerfrequenz vorzugsweise mehr als 100 MHz, weiter vorzugsweise mehr als 150 MHz umfasst, und/oder die Modulationsfrequenz vorzugsweise mehr als 20 kHz, weiter vorzugsweise mehr als 30 kHz umfasst.

6. System (100) nach einem der voranstehenden Ansprüche,
wobei der Kondensator (16) mindesten eine S-Form aufweist.

7. System (100) nach einem der voranstehenden Ansprüche,
wobei der Kondensator (16) Kupfer oder ein vergleichbares geeignetes Material umfasst.

8. System (100) nach einem der voranstehenden Ansprüche,
wobei die Auswerte-Elektronik (28) eine Datenbank für verschiedene Flüssigkeiten umfasst.

9. Flüssigkeitstank (50) umfassend eine System (100) nach einem der Ansprüche 1 bis 9,

10. Flüssigkeitstank (50) nach einem der voranstehenden Ansprüche,
wobei der Flüssigkeitstank (50) in der Nähe des Schwingkreises (12) einen Bereich (52) aufweist, wobei der Bereich (52) ein elektrisch nicht leitfähiges und thermisch isolierendes Material umfasst.

11. Flüssigkeitstank (50) nach einem der voranstehenden Ansprüche,
wobei der Flüssigkeitstank (50) eingerichtet ist, kryogene Flüssigkeiten zu enthalten.

12. Flüssigkeitstank (50) nach einem der voranstehenden Ansprüche,
wobei die Spule (14) außerhalb des Flüssigkeitstanks (50) angeordnet ist.

13. Verfahren (200) zum Kalibrieren eines Systems (100) zur drahtlosen Füllstandsmessung in einem Flüssigkeitstank (50), vorzugsweise mit einem Flüssigkeitstank (50) nach einem der Ansprüche 9 bis 12, aufweisend die folgenden Schritte:
Bereitstellen (202) eines Flüssigkeitstanks (50),
Anbringen (204) des Systems (100) an den Flüssigkeitstank (50),
Einkoppeln (206) von Radiowellen über eine Sende-Empfängereinheit (26) in einen Schwingkreis (12),
Messen (208) der induzierten Schwingung über eine Auswerte-Elektronik (28),
Zuordnen (210) der gemessen Schwingung zu einem Füllstand.

14. Luftfahrzeug (80), aufweisend eine System (100) nach einem der Ansprüche 1 bis 8.
